# FASCICULE DE BREVET EUROPEEN

(11) **EP 0 440 544 B1**
(45) Date de publication et mention de la délivrance du brevet: **09.03.1994**
(21) Numéro de dépôt: 91400195.3
(22) Date de dépôt: 29.01.1991
(51) Int. Cl.: B64G 1/58

(54) **Système de protection thermique, notamment pour véhicules spatiaux**
Thermisches Schutzsystem, insbesondere für Raumfahrzeuge
Thermal protection system, especially for spacecraft

(30) Priorité: 31.01.1990 FR 9001122
(43) Date de publication de la demande: 07.08.1991
(73) Titulaire: DASSAULT-AVIATION, F-75008 Paris (FR)
(72) Inventeur: Guibert, Bernard, F-31770 Tournefeuille (FR); Petiau, Christian, F-78370 Plaisir (FR); Chaumette, Daniel, F-92150 Suresnes (FR)
(74) Mandataire: Colas, Jean-Pierre

(56) Documents cités:
- EP-A- 0 282 361
- FR-A- 2 555 300
- US-A- 4 308 309
- US-A- 4 379 382
- US-A- 4 520 601

## Description

La présente invention est relative à un système de protection thermique d'une structure, en particulier pour véhicules spatiaux.

L'invention a son origine dans des travaux relatifs à la protection des véhicules spatiaux lors de leur rentrée dans l'atmosphère pendant laquelle la température excède 1000 degrés Celsius sur la plus grande partie de la surface extérieure du véhicule. Elle est aussi applicable dans la construction de fours et enceintes à très haute température, ainsi que d'avions à grande vitesse.

Dans l'état de l'art, les véhicules spatiaux sont protégés de plusieurs façons :
1) par un revêtement ablatif dans le cas des capsules et corps de rentrée. Ce type de revêtement n'est en général utilisable qu'une fois.
2) par une protection extérieure rigide constituée de pavés de fibres de silice agglomérées, usinés à la forme et collés sur la structure à protéger. Dans ce système, les pavés de silice ont une double fonction de maintien de la forme aérodynamique externe et d'isolation. Ce système est celui utilisé par les véhicules orbitaux ailés fonctionnant actuellement. Cependant, il présente des défauts importants. Le matériau utilisé est fragile et très sensible aux impacts. Il nécessite l'interposition entre lui et la structure à protéger d'un matelas souple destiné à réduire les contraintes. Enfin, le collage sur la structure est un procédé délicat et peu fiable. Il en résulte un système coûteux en entretien et d'une fiabilité inférieure à ce qui serait désirable.
3) Par des systèmes dans lesquels la forme aérodynamique externe est maintenue par des tuiles ou boucliers en matériaux résistant à haute température (initialement des matériaux métalliques tels que niobium, alliages de cobalt, plus récemment des matériaux composites céramique ou carbone-carbone). Par tuiles, ou boucliers, on entend ici des plaques, ayant une surface extérieure plane ou glabée, capables de résister sans déformation appréciable à des contraintes mécaniques importantes alors qu'elles sont soumises à des températures excédant 1000 degrés Celsius. Les blocs de fibres agglomérées, utilisées fréquemment dans les revêtements de fours à haute température, ne répondant évidemment pas à cette définition. Ces tuiles sont reliées à la structure à protéger par des supports souples ou articulés, et séparées par des joints permettant d'absorber les dilatations différentielles entre tuiles et structures à protéger. Une telle structure est décrite, par exemple, dans US-A-4 308 309. Entre la tuile extérieure et la structure à protéger est contenu un isolant thermique. Celui-ci, qui n'a plus pour fonction que l'isolation, peut être très léger, par exemple un isolant à écrans réflecteurs.

Parmi les problèmes mal résolus dans l'état de l'art, figure la démontabilité individuelle d'une tuile sans accès par l'intérieur de la structure à protéger. Dans l'état de l'art une telle démontabilité ne peut être obtenue que par des vis à la surface des tuiles , ou des systèmes de fixations accessibles par des bouchons ou trappes amovibles à la surface des tuiles. Dans tous ces cas, on a affaire à des systèmes mécaniques devant fonctionner à très haute température et d'une fiabilité douteuse.

Par ailleurs, sur de tels systèmes, en cas de fuite par un joint ou de défaillance d'une tuile, le risque est de voir s'établir une circulation de gaz très chauds entre les tuiles et la structure à protéger, avec des conséquences potentiellement catastrophiques.

On a suggéré, dans US-A-4 379 382, d'accéder à des moyens de fixation de blocs d'isolation formés de fibres réfractaires en écartant ces fibres, qui reprennent ensuite leur place soit spontanément soit sous une légère pression latérale. Cette manière d'opérer ne peut convenir pour les tuiles, qui sont indéformables.

L'invention a pour but de résoudre les problèmes précédents avec un système qui est par ailleurs plus simple que la plupart des systèmes considérés jusqu'ici.

Pour obtenir ce résultat, l'invention fournit un système de protection thermique d'une structure, constitué, du côté à haute température, d'un ensemble de tuiles de matériau réfractaire rigide et résistant mécaniquement à haute température, juxtaposées pour former une surface globalement continue, des joints d'expansion élastiques étant prévus entre les tuiles adjacentes, ce système ayant pour particularité que les tuiles sont fixées à la structure par des organes de fixation mécanique qui peuvent être actionnés par passage d'un outil entre deux tuiles adjacentes par déformation du joint d'expansion.

Suivant une modalité avantageuse, le joint d'expansion est en deux parties, qui sont chacune solidaire d'une tuile, la surface de contact entre les parties de joint portées par deux tuiles adjacentes étant à peu près perpendiculaire à la surface du système du côté à haute température.

De cette façon, il est possible d'enlever à la fois une tuile et la partie du joint qui lui est attenante, sans risquer d'endommager le reste du joint. En outre, au cas où cette partie de joint est fixée sur la tuile, un accès aux organes de fixation peut être trouvé en passant entre les deux parties de joint.

Plus avantageusement encore, chaque tuile est entourée d'un anneau continu de matière élastique, qui constitue, sur chaque côté de la tuile, une partie de joint élastique. Ainsi, une tuile et l'anneau qui l'entoure peuvent constituer une unité, facile à manipuler.

De préférence, la surface latérale des tuiles fait par rapport à la face à haute température un angle tel que l'intervalle entre deux tuiles adjacentes est plus étroit du côté de la face chaude que du côté de la structure à protéger. Ceci a pour effet principal de maintenir le joint en place lors de l'utilisation.

De préférence aussi, il est prévu des masses continues de matière isolante semi-rigide situées au droit des joints d'expansion, et sur lesquelles s'appuient les faces des tuiles qui sont tournées vers la structure à protéger.

De préférence encore, il est prévu, entre les tuiles et la structure à protéger, une couche de matière isolante fixée sur la structure et capable de rester en place en cas de perte d'une tuile. Le maintien de cette matière isolante peut être obtenu, par exemple, par collage.

En ce qui concerne la forme de la tuile, on peut prévoir que la face latérale d'une tuile présente une cavité qui est limitée par une surface à peu près parallèle aux faces principales de la tuile, disposée pour servir d'appui pour un organe de fixation, la profondeur de la cavité diminuant en direction du côté à haute température.

On peut aussi prévoir que la tuile porte une patte prolongeant une face latérale en direction de la surface à protéger, cette patte portant elle-même une partie d'appui pour un organe de fixation. Cette disposition, un peu plus difficile à obtenir que la précédente, a l'avantage d'écarter au maximum les moyens de fixation démontables de la zone à haute température.

Suivant un autre mode d'exécution, qui simplifie au maximum l'obtention des tuiles, mais peut être moins bien adaptée à de très hautes températures, la tuile porte des pièces de fixation fixées de façon non démontable sur sa face tournée vers la structure à protéger, ces pièces de fixation faisant saillie dans une direction parallèle aux faces principales de la tuile par une partie destinée à coopérer avec un organe de fixation démontable.

L'invention va être exposée plus en détail en s'aidant d'exemples pratiques illustrés à l'aide des dessins parmi lesquels :

Figure 1 est une vue en perspective, avec arraché d'une partie d'un système selon l'invention.

Figure 2 est une vue en perspective de détail de la fixation d'une tuile.

La figure 3 est une coupe partielle, transversale à un joint, en dehors d'une fixation.

Figures 4 et 5 sont des vues en perspective de deux modes de réalisation des tuiles conformes à l'invention, la face chaude étant visible.

Figure 6 est une coupe partielle d'une autre tuile conforme à l'invention.

L'élément de base est constitué par la tuile 1, dont au moins la face chaude 2 et les flancs 3 sont en un matériau structural résistant mécaniquement à haute température, et qui, dans l'exemple décrit, est un composite céramique à fibres de carbone noyées dans une matrice de carbure de silicium. La tuile est ici représentée de forme quadrangulaire mais d'autres formes polyédriques seraient applicables.

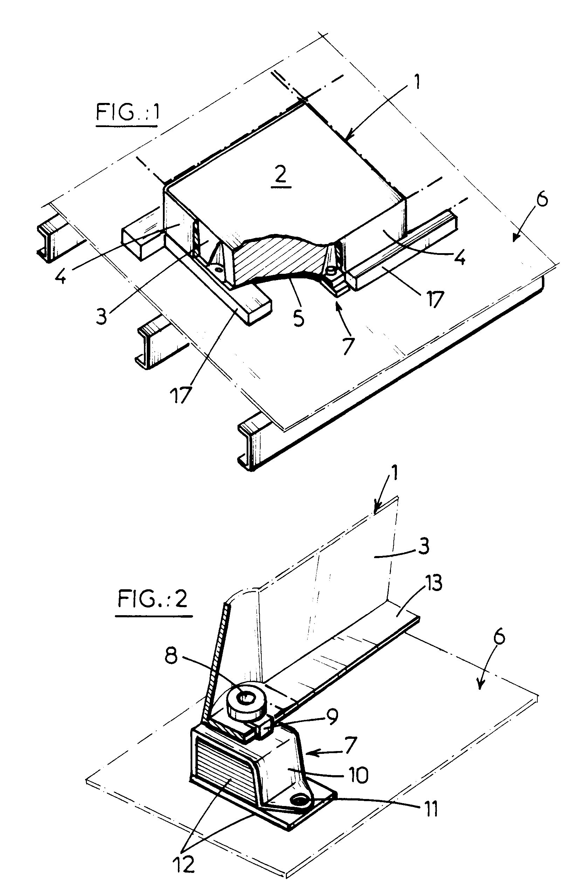

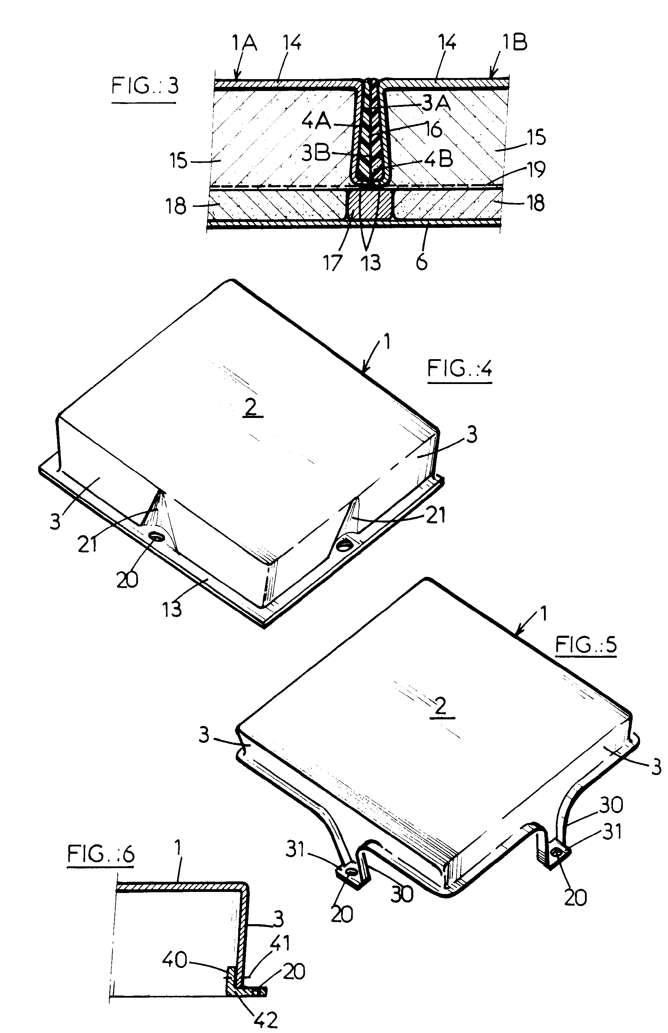

L'espace entre les flancs 3 des tuiles adjacentes est comblé par des joints 4 souples pouvant être constitués en fibres et tissus réfractaires, par exemple fibres de carbure de silicium. Les tuiles maintiennent en place un isolant 5 entre elles-mêmes et la structure à protéger 6 et sont reliées de façon démontable par une fixation 7 à la structure 6 en des points situés à la base des flancs 3, soit directement sur un repli du flanc représenté à la figure 2, soit à des petites ferrures elles-mêmes rattachées au flanc par des fixations indémontables (voir figure 6).

La figure 2 montre le détail de la fixation 7 qui comprend une vis 8 pourvue d'un système d'imperdabilité 9, et qui se visse sur un pontet-support 10 (par exemple en acier réfractaire) lié par des vis 11 à la structure à protéger 6 avec interposition de cales isolantes 12. La vis imperdable 8 est accessible par un outil passant par déformation du joint souple.

La vis 8 prend appui sur un rebord 13 de la tuile 1 dont la forme extérieure est mieux visible à la figure 4. Ce rebord est situé du côté du flanc 3 qui est à l'opposé de la face chaude 2. Par cette configuration, il est possible de placer l'élément de fixation démontable 8 dans une zone de température intermédiaire entre la surface extérieure à plus de 1000 degrés celsius et la structure interne à protéger dont la température maximale est typiquement 175 degrés celsius. De ce fait, on peut utiliser une visserie conventionnelle, par exemple en acier réfractaire correspondant à une technique fiable et éprouvée, notamment dans les moteurs d'avions.

Il est à noter que si la fixation par vis semble préférable, d'autres systèmes mécaniques, par exemple verrous ou clips, seraient utilisables, ces verrous ou clips étant rattachés au flanc de la tuile et actionnés par un outil passant par le joint entre tuiles.

La figure 3 présente une coupe à travers le joint entre deux tuiles adjacentes en dehors de la fixation 7. On y voit les deux tuiles 1A et 1B. Ces tuiles sont formées chacune d'une "coquille" mince, rigide 14 en matériau réfractaire résistant, ici un composite céramique, qui forme la face chaude 2 et les flancs 3A et 3B. Les flancs font un angle d'environ 5° avec la perpendiculaire à la face chaude, si bien que l'intervalle entre tuiles adjacentes croît en s'éloignant de la face chaude. Le rebord 13, en retour vers cet intervalle, est formé par la coquille du côté opposé à la face chaude. L'intérieur de la tuile contient un remplissage 15 de matériau à hautes performances d'isolation, c'est-à-dire, ici, un matériau à écrans réfléchissants de feuilles de céramique à placage métallique.

Le joint d'expansion 4 est en deux demi-joints 4A, 4B, chacune en tissu élastique de fibres réfractaires. La surface 16 de contact entre deux demi-joints est perpendiculaire à la face chaude. Chaque demi-joint 4A, 4B fait partie d'un anneau fermé entourant la tuile et maintenu sur elle grâce à l'obliquité des flancs et la présence du rebord. Ceci permet de démonter une tuile seule au milieu d'un ensemble sans avoir à démonter même partiellement les autres.

Un barreau d'isolant semi-rigide 17 est collé sur la structure 6 et vient supporter le flanc des tuiles 1A et 1B. Ce barreau permet, en combinaison avec les flancs des tuiles, d'empêcher une circulation de gaz chauds en dessous des tuiles, parallèlement à la surface. Il agit aussi pour limiter l'entrée de gaz chauds en constituant une deuxième barrière d'étanchéité derrière les joints 4 entre les tuiles.

Des isolants internes 18 sont contenus entre les barreaux 17, les tuiles 1A, 1B et la structure à protéger 6, et constituent, avec les barreaux 17, la couche d'isolation 5 qui sépare la tuiles de la structure à protéger.

Pour garantir la sécurité, même en cas de perte d'une tuile, il est nécessaire de conserver en place une partie de l'isolation. Ceci est possible dans ce concept de plusieurs façons : en utilisant pour tout ou partie de des isolants internes 18 un isolant assez résistant mécaniquement (par exemple un isolant matelassé) et collé ou vissé sur la structure à protéger, ou en maintenant l'isolant interne 18 en place par un voile ou une toile réfractaire 19 dans l'exemple en tissu de carbure de silicium, tendu à l'interface entre la tuile et l'isolation interne et maintenu en place par les barreaux 17 et les tuiles adjacentes à la tuile perdue.

La figure 4 montre la forme extérieure de la tuile 1 de la figure 1. Elle présente, sur ses flancs 3, un rebord 13. A l'endroit du trou 20 pour le passage de la vis 8, le flanc de la tuile présente une cavité 21 en forme de fraction de cône dont la base se trouve sur le rebord 13; et qui n'atteint pas la face chaude 2 de la tuile. On comprendra que cette cavité sert à faciliter la mise en place ou le desserrage de la vis 8. Le rebord 13 peut être prévu seulement à l'endroit de la cavité 21, mais on a préféré le placer sur tout le tour de la brique, afin de mieux maintenir l'anneau qui forme le joint élastique.

La figure 5 montre une autre réalisation de la tuile. Celle-ci présente des pattes 30, prolongeant les flancs à l'opposé de la face chaude 2. Ces pattes portent des surfaces d'appui 31, en forme de plaquettes légèrement inclinées par rapport aux faces principales de la tuile et présentant un trou 20 pour le passage de la vis 8. On conçoit que celle-ci sera soumise à des contraintes thermiques plus faibles que dans le cas de la figure 4.

La figure 6 montre une autre variante :

Des ferrures 40, en acier réfractaire, en forme de cornières, sont fixées de façon définitive par une aile sur la face interne du flanc 3, à l'aide de vis 41. L'autre aile sert de surface d'appui 42 pour la vis 8, et porte le trou 20 correspondant. Le rebord 13 peut, dans ce cas, être supprimé comme indiqué sur la figure, ou réduit en importance.

A part cette dernière modalité, l'invention est applicable au cas où la tuile 1 est une pièce massive. Dans ce cas, si on désire utiliser des ferrures distinctes, celles-ci peuvent être des fers plats fixés sur la face froide de la tuile.

## Revendications

1. Système de protection thermique d'une structure, constitué, du côté à haute température, d'un ensemble de tuiles (1) de matériau réfractaire, rigide et résistant mécaniquement à haute température juxtaposées pour former une surface globalement continue, des joints d'expansion (4) élastiques étant prévus entre les tuiles adjacentes,
caractérisé en ce que les tuiles (1) sont fixées à la structure par des organes de fixation mécanique (7) qui peuvent être actionnés par passage d'un outil entre deux tuiles adjacentes par déformation du joint d'expansion.

2. Système selon la revendication 1, caractérisé en ce que le joint d'expansion (4) est en deux parties (4A, 4B), qui sont chacune solidaire d'une tuile, la surface (16) de contact entre les parties de joint portées par deux tuiles adjacentes étant à peu près perpendiculaire à la surface du système du côté à haute température.

3. Système selon la revendication 2, caractérisé en ce que chaque tuile (1) est entourée d'un anneau continu de matière élastique, qui constitue, sur chaque côté de la tuile, une partie de joint élastique (4A, 4B).

4. Système selon l'une des revendications 1 à 3, caractérisé en ce que la surface latérale (3) des tuiles fait par rapport à la face à haute température un angle tel que l'intervalle entre deux tuiles adjacentes est plus étroit du côté de la face chaude que du côté de la structure à protéger.

5. Système selon l'une des revendications 1 à 4, caractérisé en ce qu'il est prévu des masses continues (17) de matière isolante semi-rigide situées au droit des joints d'expansion, et sur lesquelles s'appuient les faces des tuiles qui sont tournées vers la structure à protéger.

6. Système selon l'une des revendications 1 à 5, caractérisé en ce qu'il est prévu, entre les tuiles et la structure à protéger, une couche de matière isolante (18) fixée sur la structure à protéger (6) et capable de rester en place en cas de perte d'une tuile.

7. Système selon l'une des revendications 1 à 6, caractérisé en ce que la face latérale d'une tuile présente une cavité qui est limitée par une surface à peu près parallèle aux faces principales de la tuile, disposée pour servir d'appui pour un organe de fixation, la profondeur de la cavité diminuant en direction du côté à haute température.

8. Système selon l'une des revendications 1 à 6, caractérisé en ce que la tuile porte une patte (30) prolongeant une face latérale en direction de la surface à protéger, cette patte portant elle-même une partie d'appui (31) pour un organe de fixation.

9. Système selon l'une des revendications 1 à 6, caractérisé en ce que la tuile porte des pièces de fixation (40) fixées de façon non démontable sur sa partie la plus proche de la structure à protéger, ces pièces de fixation faisant saillie dans une direction parallèle aux faces principales de la tuile par une partie (42) destinée à coopérer avec un organe de fixation démontable.

10. Système selon l'une des revendications 1 à 9, caractérisé en ce que les organes de fixation mécanique comprennent une vis imperdable (8) montée sur la face latérale d'une tuile, à proximité de sa face tournée vers la structure à protéger, et qui coopère avec une pièce de fixation (10) solidaire de ladite structure.

## Patentansprüche

1. Thermisches Schutzsystem für eine Struktur, gebildet, auf der Seite der hohen Temperatur, von einer Gesamtheit von Kacheln (1) aus hochwarmfestem, starrem und mechanisch gegen hohe Temperatur widerstandsfähigem Material, die nebeneinandergesetzt sind, um eine im Ganzen kontinuierliche Oberfläche zu schaffen, wobei elastische Dehnungsfugen (4) zwischen den benachbarten Kacheln vorgesehen sind, dadurch gekennzeichnet, daß die Kacheln (1) an der Struktur mittels mechanischer Befestigungsorgane (7) befestigt sind, die durch Durchgang eines Werkzeuges zwischen zwei benachbarten Kacheln bei Verformung der Dehnfuge betätigt werden können.

2. System gemäß Anspruch 1, dadurch gekennzeichnet, daß die Dehnungsfuge (4) aus zwei Teilen (4A, 4B) ist, die jeder formschlüssig mit einer Kachel verbunden sind, wobei die Kontaktoberfläche (16) zwischen den Teilen der Fuge, die von zwei benachbarten Kacheln getragen sind, ungefähr senkrecht zur Oberfläche des Systems auf der Seite der hohen Temperatur ist.

3. System gemäß Anspruch 2, dadurch gekennzeichnet, daß jede Kachel (1) von einem kontinuierlichen Ring aus elastischem Material umgeben ist, der auf jeder Seite der Kachel einen Teil der elastischen Dehnfuge (4A, 4B) bildet.

4. System gemäß einem der Ansprüche 1 bis 3, dadurch gekennzeichnet, daß die seitliche Oberfläche (3) der Kacheln bezüglich der Seite mit hoher Temperatur einen Winkel einschließt, so daß der Zwischenraum zwischen den beiden benachbarten Kacheln an der Seite der warmen Seite enger als an der Seite der zu schützenden Struktur ist.

5. System gemäß einem der Ansprüche 1 bis 4, dadurch gekennzeichnet, daß es mit durchgehenden Massen (17) von halbstarrem Isolationsmaterial versehen ist, die senkrecht zu den Dehnungsfugen angeordnet sind, und auf denen sich die Seiten der Kacheln abstützen, die zu der zu schützenden Struktur gewandt sind.

6. System gemäß einem der Ansprüche 1 bis 5, dadurch gekennzeichnet, daß es zwischen den Kacheln und der zu schützenden Struktur mit einer Schicht aus isolierendem Material (18) versehen ist, die auf der zu schützenden Struktur befestigt und in der Lage ist, im Falle eines Verlustes einer Kachel auf ihrem Platz zu verbleiben.

7. System gemäß einem der Ansprüche 1 bis 6, dadurch gekennzeichnet, daß die seitliche Fläche einer Kachel einen Hohlraum aufweist, der von einer Fläche ungefähr parallel zu den Hauptflächen der Kachel begrenzt ist, die vorgesehen ist, um als Anlage für ein Befestigungsorgan zu dienen, wobei sich die Tiefe des Hohlraumes in Richtung der Seite hoher Temperatur vermindert.

8. System gemäß einem der Ansprüche 1 bis 6, dadurch gekennzeichnet, daß die Kachel einen Fuß (30) trägt, der eine seitliche Fläche in Richtung auf die zu schützende Oberfläche verlängert, wobei dieser Fuß selber einen Anlageteil (31) für ein Befestigungsorgan trägt.

9. System gemäß einem der Ansprüche 1 bis 6, dadurch gekennzeichnet, daß die Kachel Befestigungsteile (40) trägt, die auf eine nicht demontierbare Weise auf ihrem Teil befestigt sind, welcher der zu schützenden Struktur am nächsten ist, wobei die Befestigungsstücke in einer Richtung parallel zu den Hauptseiten der Kachel mit einem Teil (42) vorspringen, der bestimmt ist, mit einem demontierbaren Befestigungsorgan zusammenzuarbeiten.

10. System gemäß einem der Ansprüche 1 bis 9, dadurch gekennzeichnet, daß die mechanischen Befestigungsorgane eine unverlierbare Schraube (8) aufweisen, die auf der seitlichen Seite einer Kachel befestigt sind, in der Nähe ihrer der zu schützenden Struktur zugewandten Seite, und die mit einem Befestigungsstück (10) zusammenwirkt, welches mit der Struktur formschlüssig verbunden ist.

## Claims

1. System for protecting a structure against heat comprising on the high-temperature side a set of refractory material tiles (1) that are rigid and mechanically strong at high temperatures juxtaposed to form a substantially continuous surface with elastic expansion seals (4) between adjacent tiles,
characterised in that the tiles (1) are fixed to the structure by mechanical fixing members (7) which can be operated by inserting a tool between two adjacent tiles by deforming the expansion seal.

2. System according to claim 1 characterised in that the expansion seal (4) is in two parts (4A, 4B) each fastened to one tile, the contact surface (16) between the parts of the seal carried by two adjacent tiles being substantially perpendicular to the surface of the system on the high-temperature side.

3. System according to claim 2 characterised in that each tile (1) is surrounded by a continuous ring of elastic material constituting on each side of the tile part of the elastic seal (4A, 4B).

4. System according to any one of claims 1 to 3 characterised in that the lateral surface (3) of the tiles is at an angle to the high-temperature side such that the gap between two adjacent tiles is narrower on the hot side than on the side towards the structure to be protected.

5. System according to any one of claims 1 to 4 characterised in that continuous masses (17) of semi-rigid insulative material are provided in line with the expansion seals and the side of the tiles facing towards the structure to be protected bears against said material.

6. System according to any one of claims 1 to 5 characterised in that a layer (18) of insulative material is fixed to the structure (6) to be protected between said structure and the tiles and is adapted to remain in place in the eventuality of loss of a tile.

7. System according to any one of claims 1 to 6 characterised in that the lateral surface of a tile includes a cavity delimited by a surface substantially parallel to the major surfaces of the tile and adapted to provide a bearing surface for a fixing member, the depth of the cavity decreasing in the direction towards the hot side.

8. System according to any one of claims 1 to 6 characterised in that the tile has a lug (30) extending one lateral surface towards the surface to be protected and carrying a support member (31) for a fixing member.

9. System according to any one of claims 1 to 6 characterised in that the tile has fixing members (40) permanently fixed to its part nearest the structure to be protected, said fixing members having a part (42) adapted to cooperate with a removable fixing member and projecting in a direction parallel to the major surfaces of the tile.

10. System according to any one of claims 1 to 9 characterised in that the mechanical fixing members comprise a captive screw (8) on the lateral surface of a tile near the side of the tile facing towards the structure to be protected and cooperating with a fixing member (10) fastened to said structure.
